# EUROPÄISCHE PATENTSCHRIFT

(11) **EP 1 004 393 B1**
(45) Veröffentlichungstag und Bekanntmachung des Hinweises auf die Patenterteilung: **14.04.2004**
(21) Anmeldenummer: 99115954.2
(22) Anmeldetag: 13.08.1999
(51) Int. Cl.: B23Q 3/155, B23Q 3/16, B23Q 41/04, B25J 9/04, B23Q 3/157

(54) **Werkzeugmaschinen-Anordnung mit einer Vorrichtung für einen automatischen Werkzeugwechsel**
Machine tool arrangment with a device for automatic tool-change
Machine-outil avec dispositif pour le changement d'outils automatique

(30) Priorität: 25.11.1998 DE 19854276
(43) Veröffentlichungstag der Anmeldung: 31.05.2000
(73) Patentinhaber: Demmeler, Johannes, 87737 Boos (DE)
(72) Erfinder: Laempe, Hans Joachim, 79692 Raich (DE)
(74) Vertreter: Hutzelmann, Gerhard

(56) Entgegenhaltungen:
- DD-A- 238 756
- DE-A- 3 440 604
- DE-A- 3 519 706
- DE-U- 29 902 127
- US-A- 3 458 924
- US-A- 4 635 342
- US-A- 5 107 581
- PATENT ABSTRACTS OF JAPAN vol. 018, no. 062 (M-1553), 2. Februar 1994 (1994-02-02) -& JP 05 285766 A (FANUC LTD), 2. November 1993 (1993-11-02)

## Beschreibung

Die Erfindung betrifft eine Werkzeugmaschinen-Anordnung mit wenigstens einer Werkzeugmaschine und mit zumindest einer Vorrichtung für einen automatischen Werkzeugwechsel, im wesentlichen bestehend aus zumindest einem die einzelnen zu wechselnden Werkzeuge aufnehmenden Regal, Magazin oder dergleichen und wenigstens einem Werkzeugwechsler.

Derartige Werkzeugmaschinen-Anordnungen sind in vielfältiger Form bekannt, wie z.B. aus Offenlegungsschrift DE 3 440 604.A, und werden vor allem bei CNC-gesteuerten Werkzeugmaschinen angewandt.

Dabei ist es bekannt, zur Aufnahme der auszuwechselnden und auszutauschenden Werkzeuge Kettenmagazine vorzusehen, die üblicherweise am fahrbaren Ständer der beispielsweise als Bohrwerk oder auch als Dreh- oder Fräsmaschine ausgebildeten Werkzeugmaschine angebaut sind. Aufgrund des dabei zur Verfügung stehenden geringen Platzes können bei solchen Kettenwechselmagazinen in der Regel nur etwa sechzig Wechselplätze und somit sechzig Werkzeuge, bei sehr großen Bohrwerken bis zu neunzig Plätze für neunzig Werkzeuge zum Einsatz kommen. Ein solches Kettenmagazin ist beispielsweise in der EP-B-0 011 710 beschrieben. Für das Wechseln eines Werkzeuges wird dabei das Kettenmagazin an eine definierte Stelle bewegt und verstellt. Eine zusätzliche Kippeinrichtung für eine waagerechte oder senkrechte Lage gestattet das Überführen des Werkzeuges. Neben der begrenzten Zahl von auswechselbaren Werkzeugen ergibt sich bei dieser Anordnung außerdem ein hoher mechanischer Aufwand des als Kettenförderer ausgebildeten Kettenmagazines jeweils mit einer Klemmvorrichtung zum Festlegen der jeweils nicht benutzten Werkzeuge. Außerdem können die Werkzeuge aufgrund dieser Anordnung nur in eine waagerecht angeordnete Bearbeitungsspindel eingefügt werden.

Aus der EP-B-0 297 034 ist eine Wechselvorrichtung für eine Werkzeugmaschine mit einem Magazin zur Entnahme eines Werkzeuges oder Werkstückes bekannt, welches Magazin wiederum nur eine relativ geringe Anzahl von Werkzeugen aufnehmen kann und nicht statisch, sondern beweglich, nämlich um eine vertikale Achse drehbar gestaltet ist, damit das jeweilige Werkzeug in den Bereich des Manipulators gebracht werden kann. Dabei muß das jeweilige Werkzeug in einer vertikalen Spindelstellung der Werkzeugmaschine gewechselt werden.

Aus der DE-A-195 10 498 ist eine Werkzeugwechseleinrichtung für Werkzeugmaschinen mit mehreren Teilespeichern bekannt, die die einzelnen Werkzeuge aufnehmen und sich um ihre vertikale Achse drehen lassen, was einen erhöhten mechanischen Herstellungs-, Montageund Automatisierungs- sowie Betriebsaufwand bedeutet. Durch einen horizontal geführten Greiferkopf muß jedes Werkzeug - bedingt durch seine horizontale Lage in dem Teilespeicher - durch einen jeweiligen zusätzlichen Klemmechanismus in dem Teilespeicher gesichert sein. Der Werkzeugwechselmechanismus ist nur für eine sich in horizontaler Lage befindliche Arbeitsspindel geeignet. Dabei muß ein Ständer mit dem Werkzeugwechsler an dem Teilespeicher entlang verfahrbar sein, was einen entsprechend großen Platzbedarf bedingt.

Aus der DE-A-34 40 762 ist eine vertikal arbeitende Werkzeugmaschine mit Handhabungsgerät bekannt, welches lediglich auf einer Kreisbahn in einer Ebene verstellbar ist. Entsprechend begrenzt sind die Wechselmöglichkeiten, wobei das Handhabungsgerät vor allem zum Wechseln der Werkstücke und nicht der Werkzeuge dient.

Noch länger ist aus der DE-A-23 54 446 ein dreiachsiger Gelenkarm als Werkzeugwechsler bekannt, der sich aber nur in einer Ebene bewegen kann und somit wiederum nur eine sehr beschränkte Zahl von Werkzeugen wechseln kann.

Aus der DE-A-36 17 981 kennt man eine Vorrichtung zum Halten und/oder Positionieren von Werkstücken und/oder Werkzeugen oder dergleichen mit einem vierachsigen Dreh- und Gelenkarm, der sich wiederum nur in einer Ebene parallel zur Drehachse bewegen läßt und somit keinen beliebigen Raumpunkt erreichen kann. Dabei ist vor allem der Werkstückhalter an einem Traggestell um eine aufrechte Achse drehbar gelagert und innerhalb einer sich etwa parallel zur Drehachse erstreckenden Ebene lageveränderbar, was einen hohen maschinellen Aufwand bedeutet, wobei dennoch die Zahl der wechselbaren Werkzeuge beschränkt ist.

In der DE-C-34 40 604 wird eine automatische Werkzeugwechseleinrichtung für Werkzeugmaschinen, insbesondere für Universalbearbeitungszentren, mit einem dreigliedrigen Knickarm-Manipulator beschrieben, wobei eine Drei-Achsen- oder Vier-Achsen-Positioniersteuerung vorgesehen ist. Daraus ergibt sich eine relativ begrenzte Anzahl von Werkzeugen bei gleichzeitig relativ hohem maschinellem Aufwand.

Trotz dieser vielfältigen Anstrengungen und Lösungsversuche ergibt sich bisher bei Werkzeugmaschinen-Anordnungen der eingangs genannten Art für die Lagerung von zu wechselnden Werkzeugen nur ein beschränkter Platz, der dabei auch durch die Reichweite der jeweiligen Werkzeugwechsler entsprechend eingeschränkt ist. Ein weiterer Nachteil ist in aller Regel bei den vorbekannten Lösungen dadurch gegeben, daß der Spindelkopf der Werkzeugmaschine trotz seiner Verschwenkbarkeit für unterschiedliche Bearbeitungen, der also eine orthogonale Raumstellung des Werkzeuges erlaubt, in einer solchen beliebigen Position bisher keinen Werkzeugwechsel gestattet, sondern seine Zurückverstellung in eine definierte Ausgangslage, in der Regel eine vertikale oder horizontale Orientierung der Werkzeugachse, erforderlich macht.

Der Erfindung liegt deshalb die Aufgabe zugrunde, eine Werkzeugmaschinenanordnung der eingangs definierten Art zu schaffen, bei welcher eine erheblich höhere oder nahezu beliebige Anzahl von Werkzeugen zum Wechseln bereitgehalten werden kann und auch die Möglichkeit bestehen soll, den Werkzeugwechsel in einer orthogonalen Raumstellung, also abweichend von einer horizontalen oder vertikalen Position, der Werkzeugaufnahmespindel durchzuführen und dadurch den Zeitaufwand beim Werkzeugwechsel zu vermindern.

Diese Aufgabe wird erfindungsgemäß durch die Merkmale des Anspruchs 1 gelöst.

Dies erlaubt es, sehr einfach gestaltete Werkzeugmagazine nahezu beliebiger Größe zu verwenden, so daß entsprechend viele Werkzeuge bereitgehalten werden können. Der Werkzeugwechsler in Form eines Roboters mit wenigstens sechs Achsen oder sechs Freiheitsgraden erlaubt dabei eine Programmierung, durch die jedes Werkzeug an jedem Platz erfaßt und an der Werkzeugmaschine gegen das bisherige Werkzeug ausgewechselt werden kann. Da die Werkzeuge in dem oder den Magazinen ausschließlich durch Schwerkraft gehalten werden können, können aufwendige Klemmvorrichtungen für ihre Festlegung oder Förderhilfsmittel an den Magazinen vermieden werden. Darüber hinaus brauchen beim Werkzeugwechsel im Gegensatz zu Kettenmagazinen nicht zahlreiche unbenutzte Werkzeuge mitbewegt zu werden, wenn nur ein einziges ausgewechselt werden soll.

Vor allem erlaubt jedoch der erfindungsgemäß als Werkzeugwechsler dienende Roboter mit wenigstens sechs Freiheitsgraden bei entsprechender Programmierung und Koppelung mit der Programmierung der Steuerung der Werkzeugmaschine das Auswechseln der Werkzeuge auch bei beliebig im Raum orientierter Werkzeugspindel, so daß der Zeitaufwand und der Bewegungsaufwand zum Justieren der Werkzeugspindel in eine definierte vorgegebene Lage bei jedem Werkzeugwechsel vermieden und eingespart werden kann.

Für eine besonders einfache Programmierung des als Werkzeugwechsler dienenden Roboters und damit für eine einfache und effektive Handhabung der gesamten Anordnung ist es zweckmäßig, wenn die Steckaufnahmen für die zu wechselnden Werkzeuge in dem jeweiligen Magazin oder Regal in wenigstens einer gemeinsamen Ebene oder in mehreren, gegebenenfalls auch unterschiedlich geneigten, Ebenen angeordnet sind und wenn diese Ebene (n) und die Lage dieser Ebene (n) in die Steuerung und Programmierung des/der Roboter - beispielsweise durch Anfahren jeweils dreier Punkte der Ebene, also durch sogenanntes Teachen - einprogrammiert ist, wobei die Abstände der Steckaufnahmen in der jeweiligen Ebene und ihre gegenseitige räumliche Anordnung insbesondere als Offset programmiert ist. Somit ist der Programmierung und Steuerung des Werkzeugwechslers jeder Werkzeugplatz bekannt, so daß der Werkzeugwechsel automatisch gemäß einem entsprechenden Programm ablaufen kann, wie es beispielsweise durch eine bestimmte Fertigung an der Werkzeugmaschine oder einem entsprechenden Zentrum mit dieser Werkzeugmaschine oder mehreren Werkzeugmaschinen erforderlich sein kann.

Besonders günstig und für eine einfache Programmierung vorteilhaft ist es dabei, wenn die räumliche Zuordnung der Steckaufnahmen ein einfaches geometrisches Muster ist, wobei die Steckaufnahmen beispielsweise auf geraden Linien oder Kreisbögen nebeneinander und/oder mit übereinstimmenden Abständen oder ganzzahligen Vielfachen oder Bruchteilen dieser Abstände zueinander angeordnet sein können. Es kann also eine gewisse Gesetzmäßigkeit der räumlichen Anordnung der Steckaufnahmen vorgegeben werden, was die Programmierbarkeit vereinfacht.

Besonders günstig ist es dabei, wenn die Steckaufnahmen auf Kreisbögen oder geradlinig verlaufenden Segmenten in geradlinigen Reihen angeordnet sind, die jeweils zentrisch zu einer gemeinsamen Mittelachse angeordnet sind, und wenn diese Mittelachse mit der vertikalen Drehachse "1" des Roboters insbesondere übereinstimmt. Vor allem bei auf Kreisbögen angeordneten Steckaufnahmen ergibt sich dann für den Roboter praktisch immer die übereinstimmende Entfernung zu den auf diesen Kreisbögen befindlichen Werkzeugen, was wiederum das Programmieren und auch den Vorgang des Werkzeugwechsels vereinfacht. Bei geradlinig verlaufenden Reihen von Steckaufnahmen können jeweils solche "Geraden" wie Sekanten an einen Kreis um die Mittelachse des Roboters angeordnet sein, was ebenfalls sehr einfach im Programm des Roboters berücksichtigt werden kann. Gleichzeitig kann durch diese Anordnung die Reichweite des Roboters mit seinen sechs Achsen oder Freiheitsgraden bestmöglich ausgenutzt werden.

Eine weitere Ausgestaltung der Erfindung kann darin bestehen, daß als Werkzeugwechsler wenigstens ein Roboter mit sieben Achsen oder sieben Freiheitsgraden vorgesehen ist, wobei die siebte Achse eine vorgegebene Bahn beispielsweise in Form einer Geraden, einer Kurvenund/oder einer Kreisbahn ist, auf der der Roboter mit im übrigen sechs Achsen oder Freiheitsgraden verfahrbar ist. Dadurch kann die Reichweite dieses Werkzeugwechslers weiter vergrößert werden, so daß auch ein Werkzeugmagazin mit entsprechender Größe mit praktisch unbegrenzter Anzahl von Werkzeugen benutzt werden könnte. Außerdem wird dadurch ermöglicht, einen Werkzeugwechsel an wenigstens einer weiteren Werkzeugmaschine mit demselben Roboter durchzuführen, wenn er nämlich auf seiner Bahn von einer zu einer weiteren Werkzeugmaschine verschiebbar ist. Dadurch kann die Effektivität und Rentabilität der Anordnung gesteigert werden.

Dabei kann der Roboter zum Verschieben oder Verfahren im Sinne seiner siebten Achse oder seines siebten Freiheitsgrades einen eigenen Antriebsmotor aufweisen. Somit kann auch dieses Verfahren des Roboters durch dessen Programmierung gesteuert werden, so daß er eine im Bereich seiner siebten Achse oder seines siebten Freiheitsgrades angeordnete weitere Werkzeugmaschine im Sinne eines Werkzeugwechsels so bedienen kann, daß bei keiner dieser Werkzeugmaschinen unnötige Wartezeiten oder Pausen auftreten müssen.

Besonders günstig ist es, wenn der Roboter ein Knickarm-Roboter mit wenigstens einem Knickarm ist. Solche Roboter mit entsprechenden Freiheitsgraden können sogar als handelsübliche Teile erworben werden, so daß die Realisierung der erfindungsgemäßen Anordnung mit diesem Werkzeugwechsler besonders einfach und preiswert gestaltet werden kann und die Anpassung in erster Linie durch die entsprechende Programmierung erfolgt.

Dabei ergeben sich weitere vorteilhafte Ausgestaltungsmöglichkeiten im Zusammenhang mit Werkzeugmaschinen:

Der Roboter kann zum gezielten Richten von Kühlwasserdüsen bzw. des Kühlwasserstrahles an der Werkzeugmaschine programmiert sein. Somit kann er insbesondere nach einem Werkzeugwechsel auch die Richtung des Kühlwasserstromes an dieses geänderte Werkzeug anpassen.

Ebenso kann der Roboter zum gezielten Ausblasen von Bohrlöchern oder dergleichen beispielsweise vor dem Gewindeschneiden mit einer Werkzeugmaschine programmiert sein. Vor dem Austausch des Bohrers gegen den Gewindeschneider kann also durch ein entsprechendes Programm mit Hilfe des Werkzeugwechslers das Bohrloch gereinigt werden, so daß dies nicht durch eine Bedienungsperson geschehen muß.

Da die Werkzeuge im Laufe ihrer Benutzung gelegentlich nachgeschliffen werden und dadurch ihre Abmessungen verändert werden, kann eine weitere Ausgestaltung der Erfindung darin bestehen, daß die Anordnung wenigstens einen Meßtaster aufweist, mit welchem der/die Roboter ein wechselbares Werkzeug der Werkzeugmaschine und insbesondere dessen Länge überprüfen kann, und daß der Meßtaster mit der Steuerung der Werkzeugmaschine und/oder der Programmierung des Roboters verbunden ist, so daß beispielsweise die nach einem Schleifen geänderte Werkzeuglänge bei der nächsten Benutzung von der Maschinen- und/oder Robotersteuerung berücksichtigt wird. Ebenso kann auf diese Weise auch ein verschlissenes Werkzeug gegen ein neues Werkzeug ausgetauscht werden und dann dessen Länge wiederum von der Steuerung berücksichtigt werden.

Es sei noch erwähnt, daß die Verwendung eines Roboters mit einer siebten Achse auch bei Werkzeugmaschinen mit langen Schlitten oder bei langen Bohrwerken zweckmäßig sein kann, um den Werkzeugwechsel bei beliebiger Position der Werkzeugspindel, auch bei einer Position in größerer Entfernung zum Werkzeugmagazin, durchführen zu können.

Insgesamt ergibt sich vor allem bei Kombination einzelner oder mehrerer der vorbeschriebenen Merkmale und Maßnahmen die Möglichkeit, Werkzeuge beliebiger Größe und Bauart an Dreh-, Fräs- oder Bohrwerken vollautomatisch zu wechseln, wobei die jeweils gerade eingenommene Spindelkopfstellung besonders bei orthogonaler Raumstellung nicht in eine bestimmte Grundstellung zurückversetzt werden muß. Dabei können sich die Werkzeug in einem statischen, also nicht selbst dreh- oder bewegbaren ortsfesten Werkzeugmagazin ohne bewegliche Teile befinden, wobei zum Beispiel vierhundert Steckplätze vorhanden sein können und die Werkzeuge ohne Zusatzklemmen nur durch die Schwerkraft darin gelagert sind. Da die Werkzeuge von Steckaufnahmen gehalten werden, können sie auf engstem Raum in einer oder beliebigen Ebenen in Reichweite des sechsachsigen Roboters platzsparend angeordnet sein. Die Werkzeugmagazine können dabei unterschiedlichste Formen haben, solange sie in Reichweite des Roboters angeordnet sind. Hat der Roboter eine siebte Achse, ist also verfahrbar, können noch mehr Werkzeug-Lagerplätze vorgesehen und einbezogen werden. Eine sonst übliche zweifache Lagerhaltung wie Werkzeugvorratsschrank einerseits und Werkzeugwechselmagazin andererseits ist also nicht mehr erforderlich. Ferner kann der jeweilige Werkzeugsteckplatz der Bearbeitungsmaschine gleichgesetzt werden mit dem Software-Werkzeugtabellenplatz.

Ein weiterer Vorteil liegt in der schnellen Wechselzeit die unter anderem dadurch ermöglicht wird, daß die CNC-Maschinensteuerung der Robotersteuerung die jeweilige Winkellage des Spindelkopfes übermitteln kann, so daß der Roboter dann das Werkzeug in dieser Position auswechsweln kann.

Für einen schnellen Werkzeugwechsel ist es dabei zweckmäßig, wenn der Roboter an seinem Knickarm - im Falle der Verwendung eines Roboters mit mehreren Knickarmen an jedem Knickarm - wenigstens zwei Greifer aufweist. Somit kann ein neues Werkzeug im Magazin erfaßt und in den Bereich des Spindelkopfes der Werkzeugmaschine bewegt, dann dort mit dem zweiten Greifer das bisher benutzte Werkzeug entnommen und das neue Werkzeug eingesetzt werden.

Nachstehend sind Ausführungsbeispiele der Erfindung anhand der Zeichnung näher beschrieben. Es zeigt in schematisierter und perspektivischer Darstellung:

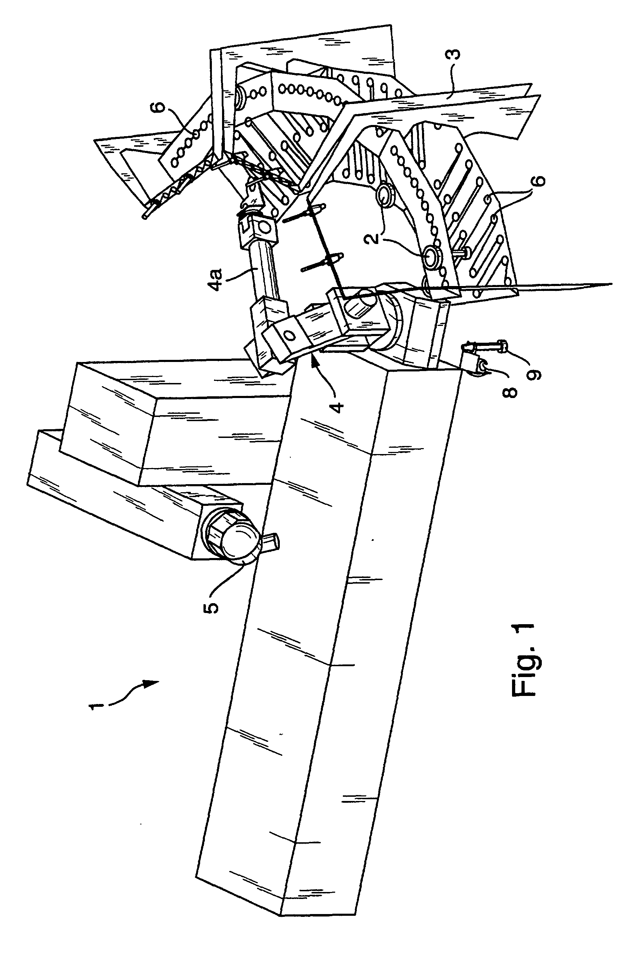

- Fig.1: eineWerkzeugmaschinenanordnungmiteinerWerkzeugmaschine und einem als Roboter mit sechs Achsen oder sechs Freiheitsgraden ausgebildeten Werkzeugwechsler sowie einem kreisbogenförmig angeordneten Werkzeugregal oder -magazin, wobei der Knickarm des Roboters und seine daran befindlichen beiden Greifer sich im Bereich des Werkzeugmagazines befinden,

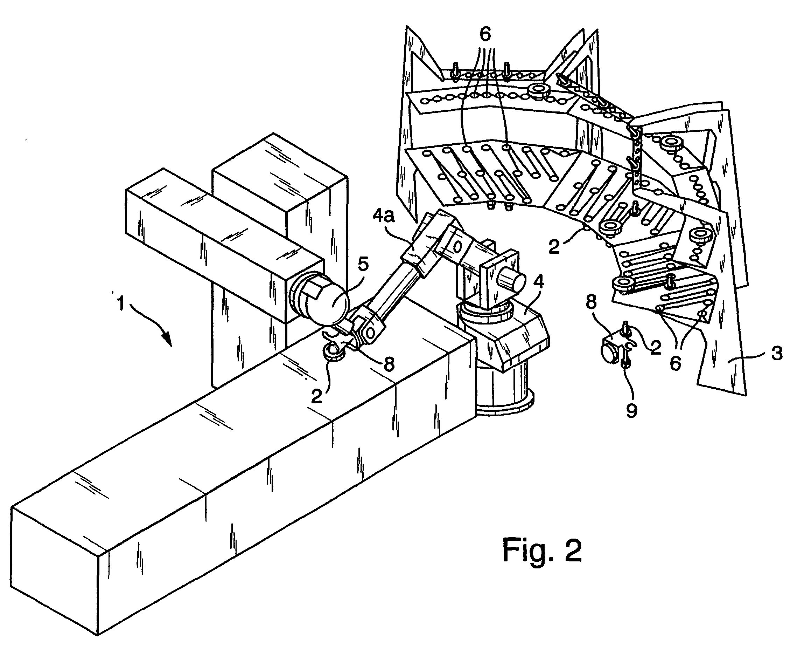

- Fig.2: eine Ansicht der in Fig.1 dargestellten Anordnung aus einem etwas anderen Blickwinkel, wobei sich die Greifer des Roboters im Bereich der Werkzeugaufnahme bzw. des Spindelkopfes der Werkzeugmaschine befinden,

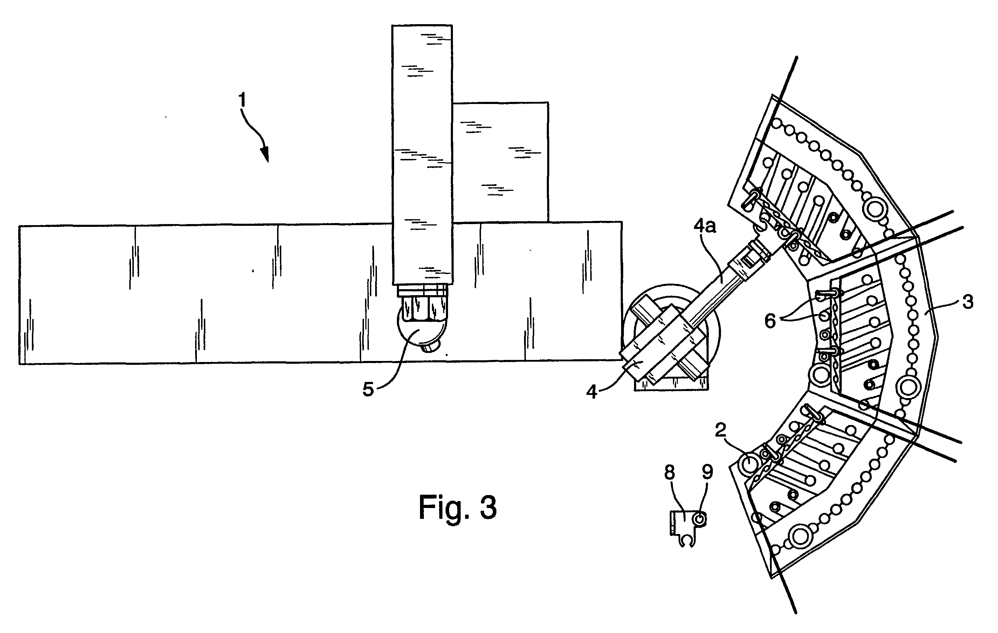

- Fig.3: eine Draufsicht der Anordnung gemäß Fig.1, woraus vor allem die kreisbogenförmige Anordnung des Werkzeugmagazines und die Anordnung der vertikalen Drehachse 1 des Roboters im Krümmungsmittelpunkt dieses Kreisbogens deutlich erkennbar ist,

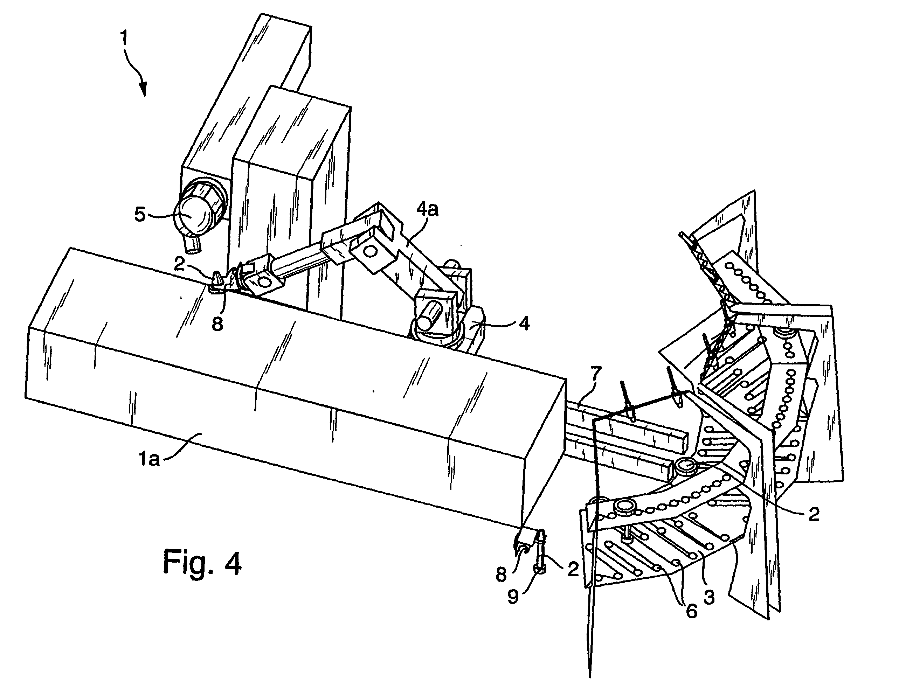

- Fig.4: eine abgewandelte Ausführungsform, bei welcher eine Werkzeugmaschine mit einem sehr langen Schlitten und demgemäß als Werkzeugwechsler einen Roboter mit einem siebten Freiheitsgrad vorgesehen ist, wobei der siebte Freiheitsgrad als geradlinige Verschiebbarkeit des Roboters entlang dem Maschinenbett der Werkzeugmaschine ausgebildet ist,

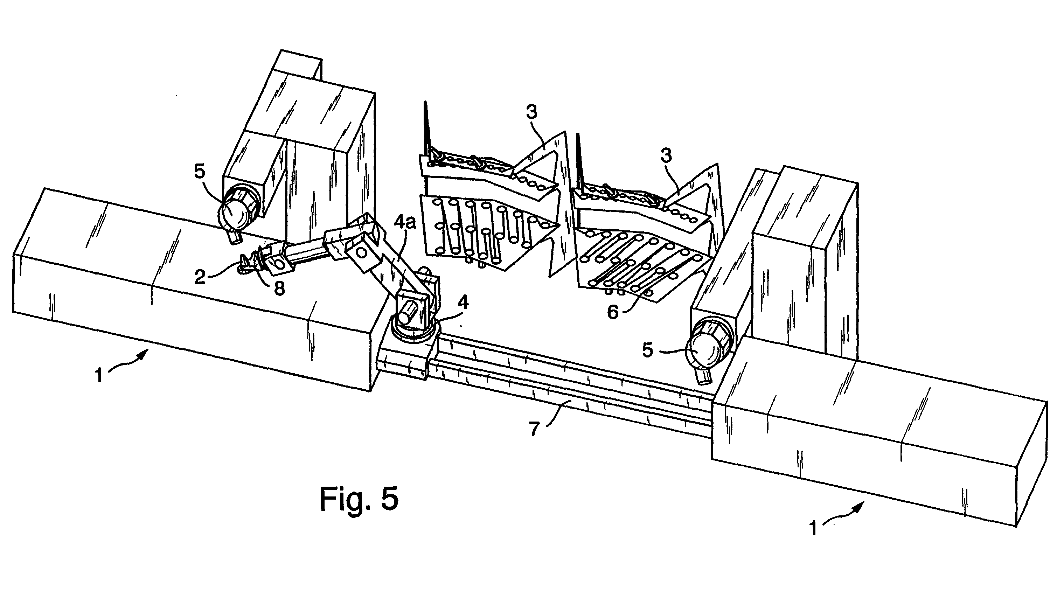

- Fig.5: eine wiederum abgewandelte Ausführungsform, bei welcher als Werkzeugwechsler ein Roboter mit einem siebten Freiheitsgrad also einer geradlinigen Verschiebbarkeit vorgesehen ist, in dessen Verschiebebereich zwei Werkzeugmaschinen angeordnet sind, so daß ein Werkzeugwechsler zwei Werkzeugmaschinen bedienen kann sowie

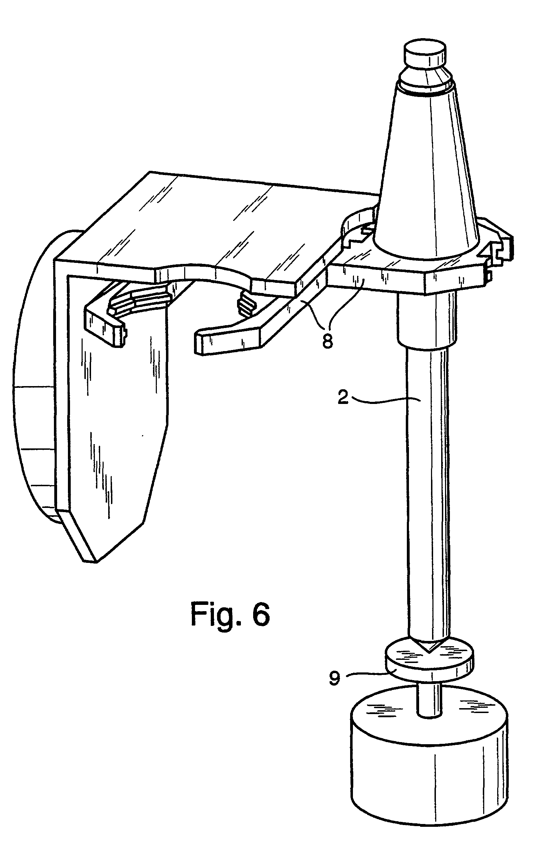

- Fig.6: in vergrößertem Maßstab einen Taster zum Messen der Länge eines jeweiligen Werkzeuges, wobei die beiden Greifer des Roboters und ein von einem dieser Greifer erfaßtes Werkzeug in Gebrauchsstellung dargestellt sind, wie es außerdem der besseren Deutlichkeit wegen in den Figuren 1 bis 4 der Fall ist.

In der nachfolgenden Beschreibung mehrerer Ausführungsbeispiele erhalten in ihrer Funktion übereinstimmende Teile auch bei etwas abgewandelter Formgebung übereinstimmende Bezugszahlen.

In den Figuren 1 bis 5 sind Werkzeugmaschinenanordnungen dargestellt, wobei die Anordnungen gemäß den Figuren 1 bis 4 jeweils eine Werkzeugmaschine 1, Fig.5 hingegen eine Anordnung mit zwei Werkzeugmaschinen 1 zeigen.

In allen Ausführungsbeispielen ist außerdem eine Vorrichtung für einen automatischen Werkzeugwechsel vorgesehen, die im wesentlichen aus zumindest einem die einzelnen zu wechselnden Werkzeuge 2 aufnehmenden Regal, Magazin 3 oder dergleichen und einem noch näher zu beschreibenden Werkzeugwechsler 4 besteht, der die einzelnen Werkzeuge 2 von dem Magazin 3 zu dem Spindelkopf 5 der Werkzeugmaschine 1 und umgekehrt transportiert.

Das oder die Werkzeugmagazine 3, die in den Ausführungsbeispielen die Form von Regalen haben, sind dabei ortsfest und in dem Sinne statisch, daß sie keine ihrerseits beweglichen Teile aufweisen, also keine schwenkbaren, kippbaren oder drehbaren Werkzeughalterungen benötigen. Sie haben vielmehr lediglich Steckaufnahmen 6, in denen die Werkzeuge 2 ausschließlich durch Schwerkraft gehalten sind. Somit sind diese Magazine 4 konstruktiv einfach und das Einstecken und Entnehmen der Werkzeuge 2 bedarf keiner zusätzlichen Maßnahmen wie ein Verschwenken oder ein Öffnen von Halteklemmen oder dergleichen.

Der schon erwähnte Werkzeugwechsler 4 ist dabei ein Roboter mit wenigstens sechs Achsen oder sechs Freiheitsgraden, der deshalb im folgenden auch "Roboter 4" genannt wird. Dieser als Werkzeugwechsler dienende Roboter 4 weist im Ausführungsbeispiel gemäß Fig.1 bis 3 in Relation zu dem Magazin 3 oder Regal eine vorgegebene feste Position oder in den Ausführungsbeispielen gemäß Fig.4 und 5 eine vorgegebene gleichbleibende Bewegungsbahn auf, so daß eine einfache Programmierung für den Werkzeugwechsel möglich ist.

In den Figuren ist angedeutet, daß der Spindelkopf 5 und die daran befindliche Spindel zur Aufnahme des jeweiligen Werkzeuges 2 nicht unbedingt eine vertikale oder horizontale oder sonstige definierte Lage für den Werkzeugwechsel benötigt. Vielmehr ist es möglich, daß die Steuerung und Programmierung des Roboters 4 mit der Steuerung und Programmierung der Werkzeugmaschine 1 derart gekoppelt ist, daß ein an der Werkzeugmaschine 1 in beliebiger räumlicher Orientierung befindliches Werkzeug 2 ohne Rückstellung des Spindelkopfes 5 in eine Ausgangslage ausgewechselt werden kann. Dies wird dadurch ermöglicht, daß der Roboter 4 wenigstens sechs Achsen oder sechs Freiheitsgrade hat.

In allen Ausführungsbeispielen ist angedeutet, daß die Steckaufnahmen 6 für die Werkzeuge 2 in dem Magazin 3 oder Regal in wenigstens einer gemeinsamen Ebene oder in mehreren Ebenen übereinander angeordnet sein können. Diese Ebenen und die Lage dieser Ebenen können in die Steuerung und Programmierung des Roboters 4 einprogrammiert sein, wobei dies beispielsweise auch erst nach der Montage der gesamten Anordnung durch Anfahren jeweils dreier Punkte der jeweiligen Ebene, also durch sogenanntes Teachen erfolgen kann. Dabei können die Abstände der Steckaufnahmen zueinander in der jeweiligen Ebene und ihre gegenseitige räumliche Anordnung als Offset programmiert sein.

In den Ausführungsbeispielen ist die räumliche Zuordnung der Steckaufnahmen 6 ein einfaches geometrisches Muster, bei welchem die Steckaufnahmen auf Kreisbögen nebeneinanderliegen, wobei eine untere Ebene drei konzentrische derartige Kreisbögen zeigt, während darüber befindliche Ebenen jeweils nur einen solchen Kreisbogen mit nebeneinanderliegenden Steckaufnahmen aufweisen. Dabei können im Verlauf dieser Kreisbögen jeweils übereinstimmende Abstände der Steckaufnahmen vorgesehen sein, wobei diese Abstände aber auch in den verschiedenen Ebenen jeweils unterschiedlich sein können, um der unterschiedlichen Größe von Werkzeugen 2 Rechnung zu tragen. Dabei erkennt man in den Figuren 1 bis 3, daß bei diesem Ausführungsbeispiel die Mittelachse, um welche die Steckaufnahmen 6 jeweils auf Kreisbögen angeordnet sind, mit der vertikalen Drehachse "eins" des Roboters übereinstimmt, so daß alle auf einem gemeinsamen Kreisbogen liegenden Steckaufnahmen 6 mit derselben Knickarmstellung des Roboters erreicht werden können und er nur um seine vertikale Achse verdreht werden muß. Die auf einem parallelen Kreisbogen befindlichen Steckaufnahmen 6 können dann durch eine entsprechende Verlängerung bzw. stärkere oder geringere Knickung des Knickarmes des Roboters 4 erreicht werden. Die Anordnung der Steckaufnahmen 6 auf Kreisbögen oder gegebenenfalls anderen einfachen geometrischen Figuren erleichtert und beschleunigt also den Werkzeugwechsel und auch die Programmierung der Steuerungen.

In den Ausführungsbeispielen gemäß Fig.4 und 5 ist jeweils als Werkzeugwechsler ein Roboter 4 mit sieben Achsen bzw. Freiheitsgraden vorgesehen, wobei die siebte Achse bzw. der siebte Freiheitsgrad eine vorgegebene Bahn in Form einer geraden bzw. geradlinigen Schienenführung 7 ist, auf der der Roboter 4 mit im übrigen sechs Achsen verfahrbar ist. Es wird also praktisch derselbe Roboter wie im Ausführungsbeispiel nach den Figuren 1 bis 3 vorgesehen, aber nicht stationär, sondern verfahrbar montiert.

Dadurch kann der Roboter 4 zur Anwendung kommen, wenn gemäß Fig.4 eine Werkzeugmaschine 1 mit einem sehr langen Maschinenbett 1a zu der Anordnung gehört oder wenn gemäß dem Ausführungsbeispiel nach Fig.5 im Bereich der siebten Achse bzw. des siebten Freiheitsgrades des Roboters 4 eine weitere Werkzeugmaschine 1 angeordnet ist. In Fig. 5 erkennt man, daß die Schienenführung 7 zwischen den Stirnseiten der beiden Werkzeugmaschinen 1 angeordnet ist. Sie könnte aber auch seitlich davon vorgesehen sein, um entsprechend lange Werkzeugmaschinen 1 ebenfalls bedienen zu können. Darüber hinaus könnte die Schienenführung 7 auch deshalb neben den Werkzeugmaschinen 1 angeordnet werden, um beidseits einer solchen Schienenführung befindliche Werkzeugmaschinen 1 bedienen zu können. Dabei hat der Roboter 4 zum Verschieben oder Verfahren im Sinne seiner siebten Achse bzw. seines siebten Freiheitsgrades im Ausführungsbeispiel einen eigenen, nicht näher dargestellten Antriebsmotor, der dann durch die Programmierung und Steuerung des Roboters 4 angesteuert werden kann.

In allen Ausführungsbeispielen ist der Roboter 4 ein Knickarmroboter mit wenigstens einem Knickarm 4a, der also durch mehr oder weniger starkes Knicken den Abstand seiner beiden Greifer 8 von seiner mittleren vertikalen Drehachse verändern kann. Der Roboter 4 hat nämlich an seinem Knickarm 4a im Ausführungsbeispiel zwei Greifer 8, was besonders gut in Fig.6, teilweise aber auch in den übrigen Figuren erkennbar ist, so daß das Wechseln eines Werkzeuges 2 beschleunigt werden kann. Es kann beispielsweise ein neues Werkzeug zu dem Spindelkopf 5 der Werkzeugmaschine 1 hin transportiert, dann dort mit dem zweiten Greifer das bisherige Werkzeug 2 aus dem Spindelkopf 5 entnommen und das neue Werkzeug wiederum eingesetzt werden, wonach das entnommene Werkzeug 2 zum Magazin 3 zurücktransportiert wird.

In der schon erwähnten Fig.6 ist ein Meßtaster 9 dargestellt, mit welchem der Roboter 4 ein wechselbares Werkzeug 2 der Werkzeugmaschine 1 und insbesondere dessen Länge überprüfen kann, wobei dieser Meßtaster 9 auch in den Figuren 1 bis 5 angedeutet ist und sich selbstverständlich in Reichweite des Knickarmes 4a und der Greifer 8 befindet. Fig.6 zeigt dabei diese beiden Greifer 8 des Roboters 4, wobei einer der Greifer ein Werkzeug 2 hält und auf dem Meßtaster 9 aufsetzt. In gleicher Weise ist dies auch in den Figuren 1 bis 4 angedeutet, obwohl dort der Knickarm des Roboters 4 jeweils in anderer Position wirksam ist. Das Werkzeug 2 und die Greifer 8 gehören also nicht zu dem Taster 9, sondern wirken im Bedarfsfalle damit zusammen.

Der Meßtaster 9 ist mit der Steuerung der Werkzeugmaschine 1 und/oder der Steuerung oder Programmierung des Roboters 4 verbunden, so daß die beispielsweise nach einem Schleifen geänderte Werkzeuglänge bei der nächsten Benutzung dieses Werkzeuges 2 von der Maschinenund/oder Robotersteuerung erkannt und berücksichtigt wird.

Da ein handelsüblicher Sechs-Achsen-Roboter als Werkzeugwechsler verwendet und durch seine Programmierung und die Anbringung zweier Greifer 8 an den speziellen Anwendungszweck als Werkzeugwechsler sehr einfach angepaßt werden kann, ergibt sich insgesamt eine preiswert zu realisierendeAnordnung, die einschnellesund einfaches Wechseln von Werkzeugen bei beliebiger Position des Spindelkopfes 5 ermöglicht.

Der automatische Werkzeugwechsel an wenigstens einer Werkzeugmaschine 1 kann mit einem als Werkzeugwechsler 4 dienenden Roboter mit wenigstens sechs Achsen bzw. Freiheitsgraden erfolgen, wobei die Programmierung der Steuerung dieses Roboters 4 eine Anpassung an das ortsfeste Werkzeugmagazin 3 und die Maschinensteuerung erlaubt, so daß der Werkzeugwechsel schnell und präzise bei beliebiger Position des Werkzeuges 2 in der Werkzeugmaschine 1 erfolgen kann.

## Patentansprüche

1. Werkzeugmaschinen-Anordnung mit wenigstens einer Werkzeugmaschine(1) und mit zumindest einer Vorrichtung für einen automatischen Werkzeugwechsel, im wesentlichen bestehend aus zumindest einem die einzelnen zu wechselnden Werkzeuge(2) aufnehmenden Regal, Magazin(3) oder dergleichen und wenigstens einem Werkzeugwechsler(4), wobei der als Werkzeugwechsler dienende Roboter(4) in Relation zu dem/den Magazin(en)(3) oder Regal(en) eine vorgegebene feste Position oder eine vorgegebene gleichbleibende Bewegungsbahn aufweist, **dadurch gekennzeichnet, daß** das oder die Werkzeugmagazine(3) oder Werkzeugaufnahme-Regale bei Gebrauch ortsfest und/oder statisch ist/sind und Steckaufnahmen(6) für die Werkzeuge(2) aufweist/aufweisen, in denen die Werkzeuge(2) durch Schwerkraft gehalten sind, daß der Werkzeugwechsler(4) ein Roboter mit wenigstens sechs Achsen oder sechs Freiheitsgraden ist und daß die Steuerung und Programmierung des Roboters(4) mit der Steuerung und Programmierung der Werkzeugmaschine(1) derart gekoppelt ist, daß ein an der Werkzeugmaschine(1) in beliebiger räumlicher Orientierung befindliches Werkzeug(2) ohne Rückstellung in eine Ausgangslage auswechselbar ist.

2. Anordnung nach Anspruch 1, **dadurch gekennzeichnet, daß** die Steckaufnahmen (6) für die Werkzeuge (2) in dem Magazin (3) oder Regal in wenigstens einer gemeinsamen Ebene oder in mehreren, gegebenenfallsauchunterschiedlichgeneigten, Ebenen angeordnet sind und daß diese Ebene(n) und die Lage dieser Ebene(n) in die Steuerung und Programmierung des/der Roboter (4) - beispielsweise durch Anfahren jeweils dreier Punkte der Ebene, also durch sogenanntes Teachen - einprogrammiert ist, wobei die Abstände der Steckaufnahmen (6) in der jeweiligen Ebene und ihre gegenseitige räumliche Anordnung insbesondere als Offset programmiert ist.

3. Anordnung nach einem der Ansprüche 1 bis 2, **dadurch gekennzeichnet, daß** die räumliche Zuordnung der Steckaufnahmen (6) ein einfaches geometrisches Muster ist, wobei die Steckaufnahmen (6) beispielsweise auf geraden Linien oder Kreisbögen nebeneinander und/oder mit übereinstimmenden Abständen oder ganzzahligen Vielfachen oder Bruchteilen dieser Abstände zueinander angeordnet sind.

4. Anordnung nach Anspruch 3, **dadurch gekennzeichnet, daß** die Steckaufnahmen (6) auf Kreisbögen oder geradlinig verlaufenden Segmenten angeordnet sind, die jeweils zentrisch zu einer gemeinsamen Mittelachse angeordnet sind, und daß diese Mittelachse mit der vertikalen Drehachse "eins" des Roboters insbesondere übereinstimmt.

5. Anordnung nach einem der Ansprüche 1 bis 4, **dadurch gekennzeichnet, daß** als Werkzeugwechsler wenigstens ein Roboter (4) mit sieben Achsen oder sieben Freiheitsgraden vorgesehen ist, wobei die siebte Achse eine vorgegebene Bahn beispielsweise in Form einer Geraden, einer Kurven- und/oder einer Kreisbahn ist, auf der der Roboter (4) mit im übrigen sechs Achsen oder Freiheitsgraden verfahrbar ist.

6. Vorrichtung nach Anspruch 5, **dadurch gekennzeichnet, daß** der Roboter (4) zum Verschieben oder Verfahren im Sinne seiner siebten Achse oder seine siebten Freiheitsgrades einen eigenen Antriebsmotor aufweist.

7. Anordnung nach einem der Ansprüche 1 bis 6, **dadurch gekennzeichnet, daß** im Bereich der siebten Achse oder des siebten Freiheitsgrades des Roboters (4) wenigstens eine weitere Werkzeugmaschine (1) angeordnet ist.

8. Anordnung nach einem der Ansprüche 1 bis 7, **dadurch gekennzeichnet, daß** der Roboter (4) ein Knickarm-Roboter mit wenigstens einem Knickarm (4a) ist.

9. Anordnung nach einem der Ansprüche 1 bis 8, **dadurch gekennzeichnet, daß** der Roboter zum gezielten Richten von Kühlwasserdüsen bzw. des Kühlwasserstrahles an der Werkzeugmaschine programmiert ist.

10. Anordnung nach einem der Ansprüche 1 bis 9, **dadurch gekennzeichnet, daß** der Roboter (4) zum gezielten Ausblasen von Bohrlöchern beispielsweise vor dem Gewindeschneiden mit einer Werkzeugmaschine programmiert ist.

11. Anordnung nach einem der Ansprüche 1 bis 10, **dadurch gekennzeichnet, daß** sie wenigstens einen Meßtaster (9) aufweist, mit welchem der/die Roboter (4) ein wechselbares Werkzeug (2) der Werkzeugmaschine (1) und insbesondere dessen Länge überprüfen kann, und daß der Meßtaster (9) mit der Steuerung der Werkzeugmaschine (1) und/oder der Programmierung des Roboters (4) verbunden ist, so daß beispielsweise die nach einem Schleifen geänderte Werkzeuglänge bei der nächsten Benutzung von der Maschinen- und/oder Robotersteuerung berücksichtigt wird.

12. Anordnung nach einem der vorstehenden Ansprüche, **dadurch gekennzeichnet, daß** der Roboter (4) an seinem oder jedem Knickarm (4a) wenigstens zwei Greifer (8) aufweist.

## Claims

1. Machine tool configuration with at least one machine tool (1) and with at least one apparatus for changing tools automatically, consisting essentially of at least one shelf, magazine (3) or similar device designed to hold the individual tools (2) that are to be changed and of at least one tool changer (4), where the robot (4) acting as the tool changer has a specified fixed position or a specified constant movement path in relation to the magazine(s) (3) or shelf (shelves), wherein the tool magazine(s) (3) or tool-holding shelves is/are fixed and/or static when in use and has/have holders (6) into which the tools (2) are inserted and in which the tools (2) are held by the force of gravity, wherein the tool changer (4) is a robot with at least six axes or six degrees of freedom and wherein the control and programming system of the robot (4) is connected to the control and programming system of the machine tool (1) in such a way that a tool (2) in any spatial orientation on the machine tool (1) can be changed without returning to a home position.

2. Configuration according to claim 1, wherein the holders (6) into which the tools (2) are inserted in the magazine (3) or shelf are located on at least one common level or on several levels that can if necessary be slanted differently, and wherein this/these level(s) and the location of this/these level(s) are programmed into the control and programming system of the robot(s) (4) - for example by moving to three points of each level, i.e. by means of what is known as teaching - where the intervals between the holders (6) on the individual level and their mutual spatial arrangement are programmed in particular as an offset.

3. Configuration according to one of claims 1 to 2, wherein the spatial arrangement of the holders (6) is a simple geometric pattern, in which the holders (6) are, for example, located next to each other in straight lines or arcs of a circle and/or at identical intervals or integral multiples or fractions of these intervals from each other.

4. Configuration according to claim 3, wherein the holders (6) are arranged on arcs of a circle or straight segments, each of which is positioned centrically in relation to a common central axis, and wherein this central axis is in particular identical to the vertical rotational axis "one" of the robot.

5. Configuration according to one of claims 1 to 4, wherein at least one robot (4) with seven axes or seven degrees of freedom is provided as the tool changer, where the seventh axis is a specified path, for example in the form of a straight line or a curved and/or circular path, along which the robot (4) can be moved with otherwise six axes or degrees of freedom.

6. Apparatus according to claim 5, wherein the robot (4) has a drive motor of its own to relocate or move as its seventh axis or its seventh degree of freedom.

7. Configuration according to one of claims 1 to 6, wherein at least one further machine tool (1) is located in the area of the seventh axis or the seventh degree of freedom of the robot (4).

8. Configuration according to one of claims 1 to 7, wherein the robot (4) is an articulated arm robot (4) with at least one articulated arm (4a).

9. Configuration according to one of claims 1 to 8, wherein the robot is programmed to direct cooling water nozzles and/or the jet of cooling water purposefully on the machine tool.

10. Configuration according to one of claims 1 to 9, wherein the robot (4) is programmed to blow out drilled holes purposefully, for example before threads are cut with a machine tool.

11. Configuration according to one of claims 1 to 10, wherein it has at least one measuring sensor (9), with which the robot(s) (4) can check a changeable tool (2) of the machine tool (1) and in particular its length, and wherein the measuring sensor (9) is connected to the control system of the machine tool (1) and/or the programming system of the robot (4), so that, for example, the change in tool length following grinding is taken into consideration when the machine and/or robot control system is used the next time.

12. Configuration according to one of the previous claims, wherein the robot (4) has at least two grippers (8) on its or each articulated arm (4a).

## Revendications

1. Configuration de machine-outil avec au moins une machine outil (1) et avec au moins un dispositif pour un changement d'outils automatique, se composant essentiellement d'au moins une étagère, magasin (3) ou similaire réceptionnant les outils (2) individuels à échanger, et d'au moins un échangeur d'outils (4), le robot (4) servant d'échangeur d'outils présentant en relation avec le/les magasin(s) (3) ou étagère(s) une position fixe imposée ou une trajectoire imposée ne variant pas, **caractérisée en ce que** le ou les magasin(s) d'outils (3) ou étagère(s) de réception des outils est/sont stationnaires ou statiques lors de l'utilisation, et présente(nt) des logements enfichables (6) pour les outils (2), dans lesquels les outils (2) sont maintenus par la force de pesanteur, **en ce que** le changeur d'outils (4) est un robot avec au moins six axes ou six degrés de liberté, et **en ce que** la commande et la programmation du robot (4) est couplée avec la commande et la programmation de la machine-outil (1) de manière à ce qu'un outil (2) se trouvant sur la machine-outil (1) dans une orientation quelconque dans l'espace, peut être échangé sans revenir dans une position de départ.

2. Configuration selon la revendication 1, **caractérisée en ce que** les logements enfichables (6) pour les outils (2) dans le magasin (3) ou l'étagère sont disposés sur au moins un plan commun ou sur plusieurs plans également inclinés de différentes manières le cas échéant, et **en ce que** ce(s) plan(s) et la position de ce(s) plan(s) sont programmés dans la commande et la programmation du/des robots (4) - par exemple en heurtant respectivement trois points du plan, c'est-à-dire par programmation par apprentissage - moyennant quoi les espacements des logements enfichables (6) dans le plan respectif et leur disposition réciproque dans l'espace sont en particulier programmés en tant qu'offset.

3. Configuration selon l'une quelconque des revendications 1 et 2, **caractérisée en ce que** l'affectation dans l'espace des logements enfichables (6) est un motif géométrique simple, où les logements enfichables (6) sont par exemples disposés les uns à côté des autres sur des lignes droites ou des arcs de cercle et/ou les uns par rapport aux autres avec des espacements coïncidents ou avec des multiples entiers ou des fractions de ces espacements.

4. Configuration selon la revendication 3, **caractérisée en ce que** les logements enfichables (6) sont disposés sur des arcs de cercles ou des segments s'étendant en ligne droite, lesquels sont respectivement aménagés de manière centrale par rapport à un axe médian commun, et **en ce que** cet axe médian coïncide en particulier avec l'axe de rotation vertical « un » du robot.

5. Configuration selon l'une quelconque des revendications 1 à 4, **caractérisée en ce qu'**en guise de changeur d'outils au moins un robot (4) avec sept axes ou sept degrés de liberté est prévu, où le septième axe est une trajectoire imposée, par exemple sous forme d'une droite, d'une courbe et/ou d'une trajectoire circulaire, sur laquelle le robot (4) avec par ailleurs six axes ou degrés de liberté, peut être déplacé.

6. Configuration selon la revendication 5, **caractérisée en ce que** le robot (4) présente un moteur de commande propre pour le glissement ou déplacement selon son septième axe ou son septième degré de liberté.

7. Configuration selon l'une quelconque des revendications 1 à 6, **caractérisée en ce que** dans la zone du septième axe ou du septième degré de liberté du robot (4), au moins une autre machine-outil (1) est disposée.

8. Configuration selon l'une quelconque des revendications 1 à 7, **caractérisée en ce que** le robot (4) est un robot à bras articulé avec au moins un bras articulé (4a).

9. Configuration selon l'une quelconque des revendications 1 à 8, **caractérisée en ce que** le robot est programmé pour l'orientation ciblée de tuyères d'eau de refroidissement et/ou du jet d'eau de refroidissement sur la machine-outil.

10. Configuration selon l'une quelconque des revendications 1 à 9, **caractérisée en ce que** le robot (4) est programmé pour la purge ciblée de forures par exemple avant le découpage du filetage avec une machine-outil.

11. Configuration selon l'une quelconque des revendications 1 à 10, **caractérisée en ce qu'**elle présente au moins un palpeur (9) à l'aide duquel le/les robot(s) (4) peut vérifier un outil (2) échangeable de la machine-outil (1) et en particulier la longueur de celui-ci, et **en ce que** le palpeur (9) est relié à la commande de la machine-outil (1) et/ou la programmation du robot (4), de sorte que par exemple la longueur modifiée de l'outil après un rodage est prise en compte par la commande de la machine et/ou du robot lors de la prochaine utilisation.

12. Configuration selon l'une quelconque des revendications précédentes, **caractérisée en ce que** le robot (4) présente au moins deux pinces (8) sur son ou chaque bras articulé (4a).
